# EUROPEAN PATENT SPECIFICATION

(11) **EP 2 880 269 B1**
(45) Date of publication and mention of the grant of the patent: **13.04.2016**
(21) Application number: 13737645.5
(22) Date of filing: 19.06.2013
(51) Int. Cl.: F01N 3/20, F01N 5/04, F02B 37/18

(54) **AN INTERNAL COMBUSTION ENGINE AND METHOD OF OPERATING AN INTERNAL COMBUSTION ENGINE**
VERBRENNUNGSKRAFTMASCHINE SOWIE VERFAHREN ZUM BETREIBEN EINER SOLCHEN VERBRENNUNGSKRAFTMASCHINE
MOTEUR À COMBUSTION INTERNE ET PROCÉDÉ PERMETTANT DE FAIRE FONCTIONNER LEDIT MOTEUR À COMBUSTION INTERNE

(30) Priority: 30.07.2012 FI 20125820
(43) Date of publication of application: 10.06.2015
(73) Proprietor: Wärtsilä Finland Oy, 65380 Vaasa (FI)
(72) Inventor: MONNET, Gilles, FI-65230 Vaasa (FI)
(74) Representative: Genip Oy
(86) International application number: PCT/FI2013/050671
(87) International publication number: WO 2014/020230

(56) References cited:
- EP-A1- 1 728 989
- EP-A2- 1 306 534
- DE-A1- 19 833 619
- US-A1- 2010 139 269
- US-A1- 2011 131 978

## Description

### Technical field

Invention relates to an internal combustion engine comprising a turbo-charger unit having at least one compressor part and at least one turbine part, the at least one compressor part connected to the inlet side of the engine and the at least one turbine part connected to the outlet side of the engine and a catalyst unit arranged between the outlet side of the engine and the inlet side of the at least one turbine part, and a control system arranged to control the operation of the internal combustion engine, in which the at least one turbine part is provided with a first by-pass conduit having a first flow control device, extending between the inlet side of the turbine part and the outlet side of the turbine part, and the catalyst unit is provided with a second by-pass conduit having a second flow control device, extending between the inlet side of the catalyst unit and the outlet side of the catalyst unit.

Invention relates also to a method of operating an internal combustion engine.

### Background art

US 2010139269 A1 discloses a chargeable internal combustion engine contains a motor which has an exhaust manifold on the exhaust gas side, a turbocharger which has at least two turbocharger stages and, on the exhaust gas side, has an exhaust gas inlet and an exhaust gas outlet. The engine further has a primary catalytic converter, which is arranged on the exhaust gas side between the exhaust manifold of the engine block and the exhaust gas inlet of the turbocharger. In preferred embodiment of the document, provision is made for a first bypass device, which is used to bridge the primary catalytic converter by means of a first bypass device which is configured, in an open state, to guide the exhaust gas that is produced by the engine block past the primary catalytic converter. The provision of such a first bypass device is advantageous if the primary catalytic converter is designed to be smaller than the main catalytic converter and is therefore only configured for small quantities of exhaust gas. This small primary catalytic converter is therefore only configured for the cold running phase of the engine, i.e. the time period immediately after the engine is started. After this period, when higher exhaust gas throughputs are present at higher temperatures, it is bridged by the first bypass device. As a result, the auxiliary catalytic converter is protected from excessive exhaust gas throughputs and hence rapid aging. EP 1728989 discloses a multi stage turbocharger arrangement having a pre catalysator upstream of the low pressure turbine and a bypass system enabling to heat the catalysators sufficiently.

WO 94/04804 discloses a large two-stroke turbocharged internal combustion engine having a reactor for reduction of the NOx-contents in the exhaust gas connected upstream of the turbocharger. There is at least one sensor arranged which measures at least one engine parameter and a control unit in which it is determined whether the reactor is heated by the exhaust gas. The heating may cause reduced energy supply to the turbocharger. When this is the case the control unit opens for supply of supplementary air or gas to the engine which may be effected by starting an auxiliary blower and/or by actuating a control means in a turbocharger turbine bypass conduit so that a larger amount of exhaust gas with a corresponding increase in the power is delivered to the turbocharger turbine.

As is disclosed in WO 94/04804 the exhaust gas has to have a temperature of at least 300 deg C when it is supplied to the reactor, thus the latter necessarily has to be connected to the exhaust system before the turbocharger. When the engine load is increased, the temperature of the exhaust gas rises, which leads to a heating up of the reactor. As the reactor has a large heat capacity, the heating of the reactor to the higher temperature may take a long time, and during this period the temperature of the exhaust gas after the reactor will be somewhat lower than the temperature before the reactor, which means that the energy content of the exhaust gas after the reactor is not in itself sufficiently large for the compressor of the turbocharger to receive power corresponding to the instantaneous engine load. In other words, the large heat capacity of the reactor and its connection upstream of the turbocharger have the effect that there is a certain time delay in the influence on the turbocharger from increasing engine loads, and the delay increases with the change in the load.

To solve this problem WO 94/04804 suggests that when the reactor is heated with simultaneous cooling of the exhaust gas, and during these periods supplying supplementary air or gas to the turbocharger, it is possible to ensure that the engine receives an amount of scavenging and charging air which correctly matches the engine load, also in the period immediately following a change of the engine load. The feeding of supplementary air may be accomplished by an auxiliary blower so that the auxiliary blower has sufficient capacity to compensate for the heating up of the reactor.

An additional or alternative option to the auxiliary blower shown in WO 94/04804 is a by-pass conduit which may connect the exhaust passage between the reactor and the turbine of the turbocharger with the exhaust passage downstream of said turbine, a control means which may fully or partially cut off the by-pass conduit, at least one sensor for measurement of an engine parameter, and a control unit for control of the control means in dependency of signals received from the sensor. As the turbocharger does not require all the exhaust gas in order to deliver the required amount of scavenging and charging air to the engine, the control means is adjusted to such a partially open position that the compressor of the turbocharger delivers exactly the desired amount of air. Preferably the control closes the by-pass conduit, before the auxiliary blower is started.

Another embodiment shown in WO 94/04804 is to arrange the by-pass conduit extending from the upstream to the downstream side of the reactor instead of the upstream to the downstream side of the turbine of the turbocharger: This embodiment works by the control unit opening for the control means in the by-pass so that part of the exhaust gas is by-passed the reactor and passed directly to the turbine of the turbocharger. In the embodiment the engine is connected on its output side with a reactor for reduction of the NOx content of the exhaust gas, a turbocharger with a turbine, the gas inlet of which is connected to the gas outlet of the reactor, a reactor by-pass conduit which may connect the exhaust gas receiver with the turbine of the turbocharger, a cutting-off means in the by-pass conduit, and an auxiliary blower for supply of scavenging and charging air, and at least one sensor for measurement of an engine parameter and a control unit which is able to control the cutting-off means to an at least partially open position in dependency of signals received from the sensor. The sensor for measurement of an engine parameter comprises preferably a sensor for measurement the temperature of the exhaust gas upstream of the reactor and a sensor for measurement of the temperature of the exhaust gas at the inlet of the turbocharger.

It is an object of the invention to provide an alternative solution to the above addressed problem.

### Disclosure of the Invention

Objects of the invention are substantially met by an internal combustion engine comprising a turbocharger unit having at least one compressor part and at least one turbine part, the at least one compressor part connected to the inlet side of the engine and the at least one turbine part connected to the outlet side of the engine and a catalyst unit arranged between the outlet side of the engine and the inlet side of the at least one turbine part, and a control system arranged to control the operation of the internal combustion engine, in which the at least one turbine part is provided with a first by-pass conduit having a first flow control device, extending between the inlet side of the turbine part and the outlet side of the turbine part, and the catalyst unit is provided with a second by-pass conduit having a second flow control device, extending between the inlet side of the catalyst unit and the outlet side of the catalyst unit, and where the control system is provided with an operating mode which initiates simultaneous closing action of the first flow control device and closing action of the second flow control device. It is characteristic to the invention that the control system is provided with a position indicator of the first flow control device, and the control system is arranged to monitor the position status of the first flow control device and allow the closing action of the second flow control device only in the case that the first flow control device closing margin greater than a pre-determined set margin.

According to an embodiment of the invention the second flow control device is arranged route more air into the catalyst unit by the closing action.

According to another embodiment of the invention the control system is arranged to determine a control value for the first flow control device, and allow the closing action of the second flow control device only in the case that the control value for first flow control device has a closing margin greater than a pre-determined set margin.

Objects of the invention are also met by method of operating an internal combustion engine in which method the engine is operated in a manner providing exhaust gas of temperature which is under a target operation temperature of the catalyst unit, the by-pass conduit valve is opened leading greater amount of the exhaust gas through the second bypass conduit and by-passing the catalyst unit, valve in the first by-pass conduit is controlled to compensate the changes in the state of the incoming exhaust gas to the turbine part caused by the previous step of leading greater amount of the exhaust gas through the second bypass conduit, initiating a transition phase during which the portion of the exhaust gases led through the second by-pass conduit is decreased and the portion of the exhaust gases led through the catalyst unit is increased and simultaneously controlling the valve in the first by-pass conduit to compensate the changes in the state of the incoming exhaust gas to the turbine part.

This way the heat and pressure losses caused by the catalyst unit may be avoided and provide better circumstances for the turbine part during a low load stage of the engine.

According to an embodiment of the invention the method is practiced during a start-up stage of the engine while the exhaust gas temperature of which engine is under a target operation temperature of the catalyst unit.

This way the heat and pressure losses caused by the catalyst unit may be avoided and provide better circumstances for the turbine part during particularly a start-up stage of the engine.

According to an embodiment of the invention the by-pass conduit valve is totally opened and the exhaust gas channel valve is totally closed leading all the exhaust gas through the second bypass conduit and by-passing the catalyst unit totally.

### Brief Description of Drawings

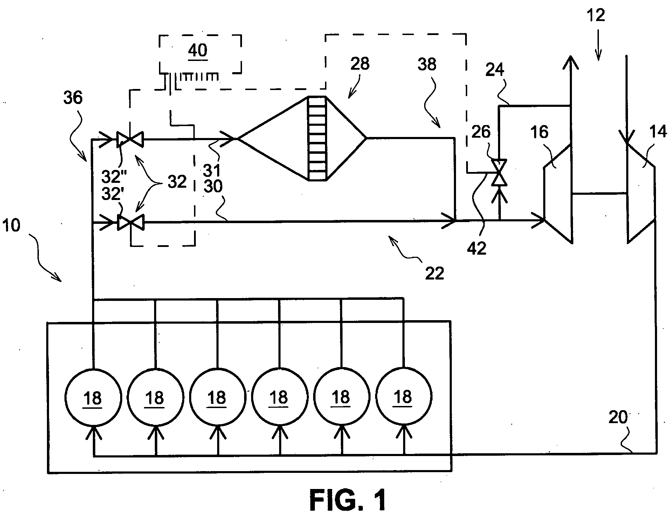

the following, the invention will be described with reference to the accompanying exemplary, schematic drawings, in which Figure 1 illustrates an internal combustion engine according to an embodiment of the invention.

### Detailed Description of Drawings

Figure 1 depicts an internal combustion engine 10 provided with a turbocharger unit 12. The turbocharger unit comprises at least on compressor part 14 and at least one turbine part 16. It is to be understood that within the scope of the invention the turbocharger unit may comprise several turbine parts and compressor parts as well. The compressor part 14 in connected to an inlet side of the engine and the cylinders 18 of the engine via an inlet channel system 20 to supply pressurized combustion air therein. Respectively the turbine part 16 is connected to the outlet side of the engine and the cylinders of the engine via an exhaust channel system 22 to receive exhaust gases of the engine energy of which is to be used for operating the compressor part in a manner known as such. In order to control the operation of the compressor part 14 the turbine part is provided with a first by-pass conduit 24 in which a first flow control device 26 is arranged. The first by-pass conduit and the flow control device constitute a so called waste gate. The first by-pass conduit 24 extends between the inlet side (higher pressure) of the turbine part 16 and the outlet side (lower pressure) of the turbine part 16. Since the compressor part 14 is driven by the turbine part 16 it is possible to control the operation of the compressor part 14 by controlling the shares of exhaust gas led through the turbine part and by-passing the turbine part by making use of the first flow control device 26.

There is a catalyst unit 28 arranged to the exhaust channel system 22 between the outlet side of the engine and the inlet side of the at least one turbine part 16. The catalyst unit is provided with a second by-pass conduit 30 having a second flow control device 32. The second by-pass conduit 30 extends between the inlet side of the catalyst unit 34 and the outlet side of the catalyst unit 36. The second flow control device 32 comprises in the embodiment of figure 1 a dedicated valve 32' for the second by-pass conduit 30 and a valve 32" for an exhaust channel 31 into which the catalyst unit is coupled. Instead of separate valves, a 3-way valve may be used. According to an embodiment only the valve 32' is arranged to the second by-pass conduit 30. Thus the exhaust gases generated by combustion in the cylinders 18 of the engine 10 may be routed alternatively through the catalyst unit 28 or directly to the turbine part 16 by operating the second flow control device 32.

The combustion engine further comprises a control system 40 arranged to control the operation of the internal combustion engine. The control system 40 is arranged to control the operation of at least the first flow control device 26 and the second flow control device 32. The control system is provided with a computer program which is arranged to operate the engine and the valves 26,32', 32", particularly a start-up phase of the engine, so that when engine starts, the by-pass conduit valve 32' opened, preferably totally and exhaust gas channel valve 32" is closed, preferably totally, whereas exhaust gases flows through the second by-pass conduit 30 and not through the catalyst unit 28. This way any uncontrolled catalyst reactions at low load, and/or at start-up circumstances while the temperature of the catalyst unit 28 is under a target operation temperature, are avoided, or at least minimized. When operational conditions of the catalyst unit 28 are gradually met by warming the catalyst unit into its operation temperature, the control system 40 starts, by means of the operation of the computer program, a transition phase to route smaller portion of the exhaust gases through the second by-pass conduit 30 and route more gas flow through the catalyst unit 28. The transition is beneficial especially when catalyst unit 28 is not at its operating temperature. If the exhaust gases would be routed directly via the catalyst unit the exhaust gases energy would be partially consumed to warm-up the catalyst unit 28 cooling he exhaust gas and resulting in less energy available for operation of the turbine part 16. As a consequence, if the transition is too fast, turbine part 16 will not provide enough work for compressor part 14 and thus it cannot deliver the pressure required to satisfy air fuel ratio constraints of the engine.

In order to avoid that the control system 40 is arranged, particularly during the start-up phase, to control the second flow control device 32 based on the operational status of the first flow control device 26.

According to an embodiment of the invention the control system 40 and/or the computer program running in the control system is arranged to determine the position status of the first flow control device 26 by means of a position indicator 42 arranged into the control system, preferably to the first flow control device 26. In case a portion of the exhaust gases is still flowing through the second by-pass conduit 30 and the position status indicates that the first flow control device 26 has a closing margin greater than a predetermined set margin the control system 40 and/or the computer program running in the control system controls the second flow control device 32 initiate a closing action thus routing a greater portion of the exhaust gases through the catalyst unit 28.

other words, the closing margin of the first flow control device 26 is used as an input for controlling exhaust flow routing between catalyst unit 28 and the second bypass conduit 30.

According to another embodiment of the invention the control system 40 and/or the computer program running in the control system is arranged to control the position status of the first flow control device 26 by generating a control value for the first flow control device 26 in the system. The control value is considered to be the position status of the first flow control device 26 i.e. it is assumed that the first flow control device actually follows the control value, which is normally is the case. In case a portion of the exhaust gases is still flowing through the second by-pass conduit 30 and the control value indicates that the first flow control device 26 has a closing margin greater than a predetermined set margin the control system 40 and/or the computer program running in the control system controls the second flow control device 32 initiate a closing action thus routing a greater portion of the exhaust gases through the catalyst unit 28.

When exhaust gas is routed through catalyst unit being at lower temperature than the exhaust gases entering the catalyst unit 28 the control system 40 controls the first flow control device 26 to initiate a closing action. This way the work performed by the turbine part 16 is increased to compensate the decreasing of the exhaust gas temperature and pressure level of the combustion air is maintained at desired level.

Thus the control system is provided with an operating mode which initiates simultaneous closing action of the first flow control device and closing action of the second flow control device, which causes decreasing of the exhaust gas flow through the first by-pass conduit and the second by-pass conduit.

In the embodiment of the invention where the second flow control device 32 comprises only the by-pass conduit valve 32' the second flow control device is arranged route more air into the catalyst unit by closing action of the valve 32'.

While the invention has been described herein by way of examples in connection with what are, at present, considered to be the most preferred embodiments, it is to be understood that the invention is not limited to the disclosed embodiments, but is intended to cover various combinations or modifications of its features, and several other applications included within the scope of the invention, as defined in the appended claims. The details mentioned in connection with any embodiment above may be used in connection with another embodiment when such a combination is technically feasible.

## Claims

1. An internal combustion engine (10) comprising a turbocharger unit having at least one compressor part and at least one turbine part (16), the at least one compressor part (14) connected to the inlet side of the engine (10) and the at least one turbine part connected to the outlet side of the engine and a catalyst unit (28) arranged between the outlet side of the engine and the inlet side of the at least one turbine part (16), and a control system (40) arranged to control the operation of the internal combustion engine, in which the at least one turbine part is provided with a first by-pass conduit (24) having a first flow control device (26), extending between the inlet side of the turbine part and the outlet side of the turbine part, and the catalyst unit (28) is provided with a second by-pass conduit (30) having a second flow control device (32), extending between the inlet side of the catalyst unit and the outlet side of the catalyst unit, and where the control system (40) is provided with an operating mode which initiates simultaneous closing action of the first flow control device (26) and closing action of the second flow control device (32), **characterized in that** the control system (40) is provided with a position indicator (42) of the first flow control device (26), and the control system is arranged to monitor the position status of the first flow control device (26) and allow the closing action of the second flow control device (32) only in the case that the first flow control device (26) closing margin is greater than a predetermined set margin.

2. An internal combustion engine according to claim 1, **characterized in that** the second flow control device (32) is arranged route more air into the catalyst unit by the closing action.

3. An internal combustion engine according to claim 1, **characterized in that** the control system (40) is arranged to determine a control value for the first flow control device, and allow the closing action of the second flow control device only in the case that the control value for first flow control device has a closing margin greater than a pre-determined set margin.

4. Method of operating an internal combustion engine (10) according to anyone of the preceding claims 1-3 in which method the engine is operated in a manner providing exhaust gas of temperature which is under a target operation temperature of the catalyst unit, the by-pass conduit valve (32') is opened leading greater amount of the exhaust gas through the second bypass conduit and by-passing the catalyst unit, valve (26) in the first by-pass conduit is controlled to compensate the changes in the state of the incoming exhaust gas to the turbine part (16) caused by the previous step of leading greater amount of the exhaust gas through the second bypass conduit, initiating a transition phase during which the portion of the exhaust gases led through the second by-pass conduit (30) is decreased and the portion of the exhaust gases led through the catalyst unit (28) is increased and simultaneously controlling the valve (26) in the first by-pass conduit to compensate the changes in the state of the incoming exhaust gas to the turbine part (16).

5. Method of operating an internal combustion engine according to claim 4, **characterized in that** the method is practiced during a start-up stage of the engine while the exhaust gas temperature of which engine is under a target operation temperature of the catalyst unit.

6. Method of operating an internal combustion engine according to claim 5, **characterized in that** the by-pass conduit valve (32') is totally opened and the exhaust gas channel valve (32") is totally closed leading all the exhaust gas through the second bypass conduit (30) and by-passing the catalyst unit totally.

## Patentansprüche

1. Verbrennungsmotor (10), umfassend eine Turboladereinheit, die mindestens einen Kompressorteil und mindestens einen Turbinenteil (16) aufweist, wobei der mindestens eine Kompressorteil (14) an die Einlassseite des Motors (10) angeschlossen ist und der mindestens eine Turbinenteil an die Auslassseite des Motors angeschlossen ist, und eine Katalysatoreinheit (28), die zwischen der Auslassseite des Motors und der Einlassseite des mindestens einen Turbinenteils (16) angeordnet ist, und ein Steuersystem (40), das angeordnet ist, um den Betrieb des Verbrennungsmotors zu steuern, wobei der mindestens eine Turbinenteil mit einer ersten Umgehungsleitung (24) versehen ist, die eine erste Durchflussregelvorrichtung (26) aufweist, die sich zwischen der Einlassseite des Turbinenteils und der Auslassseite des Turbinenteils erstreckt, und wobei die Katalysatoreinheit (28) mit einer zweiten Umgehungsleitung (30) versehen ist, die eine zweite Durchflussregelvorrichtung (32) aufweist, die sich zwischen der Einlassseite der Katalysatoreinheit und der Auslassseite der Katalysatoreinheit erstreckt, und wobei das Steuersystem (40) mit einem Betriebsmodus versehen ist, der eine gleichzeitige Schließaktion der ersten Durchflussregelvorrichtung (26) und eine Schließaktion der zweiten Durchflussregelvorrichtung (32) einleitet, **dadurch gekennzeichnet, dass** das Steuersystem (40) mit einem Positionsindikator (42) der ersten Durchflussregelvorrichtung (26) versehen ist und das Steuersystem angeordnet ist, um den Positionsstatus der ersten Durchflussregelvorrichtung (26) zu überwachen und die Schließaktion der zweiten Durchflussregelvorrichtung (32) nur für den Fall zu erlauben, dass die Schließtoleranz der ersten Durchflussregelvorrichtung (26) größer als eine vorbestimmte Einstelltoleranz ist.

2. Verbrennungsmotor nach Anspruch 1, **dadurch gekennzeichnet, dass** die zweite Durchflussregelvorrichtung (32) angeordnet ist, um durch die Schließaktion mehr Luft in die Katalysatoreinheit zu leiten.

3. Verbrennungsmotor nach Anspruch 1, **dadurch gekennzeichnet, dass** das Steuersystem (40) angeordnet ist, um einen Steuerwert für die erste Durchflussregelvorrichtung zu bestimmen und die Schließaktion der zweiten Durchflussregelvorrichtung nur für den Fall zu erlauben, dass der Regelwert für die erste Durchflussregelvorrichtung eine Schließtoleranz aufweist, die größer als eine vorbestimmte Einstelltoleranz ist.

4. Verfahren zum Betreiben eines Verbrennungsmotors (10) nach einem der vorhergehenden Ansprüche 1 bis 3, wobei der Motor derart betrieben wird, dass er Abgase mit einer Temperatur erzeugt, die unter einer Zielbetriebstemperatur der Katalysatoreinheit liegt, das Umgehungsleitungsventil (32') geöffnet wird und eine größere Menge der Abgase durch die zweite Umgehungsleitung führt und die Katalysatoreinheit umgeht, das Ventil (26) in der ersten Umgehungsleitung gesteuert wird, um die Änderungen des Zustands der ankommenden Abgase in den Turbinenteil (16), die durch den vorhergehenden Schritt des Führens einer größeren Menge der Abgase durch die zweite Umgehungsleitung verursacht werden, zu kompensieren, dass er eine Übergangsphase einleitet, während welcher der Anteil der Abgase, der durch die zweite Umgehungsleitung (30) geführt wird, verringert wird, und der Anteil der Abgase, der durch die Katalysatoreinheit (28) geführt wird, erhöht wird, und dass er gleichzeitig das Ventil (26) in der ersten Umgehungsleitung steuert, um die Änderungen des Zustands der ankommenden Abgase in den Turbinenteil (16) zu kompensieren.

5. Verfahren zum Betreiben eines Verbrennungsmotors nach Anspruch 4, **dadurch gekennzeichnet, dass** das Verfahren während einer Anlassphase des Motors umgesetzt wird, während die Abgastemperatur des Motors unter einer Zielbetriebstemperatur der Katalysatoreinheit liegt.

6. Verfahren zum Betreiben eines Verbrennungsmotors nach Anspruch 5, **dadurch gekennzeichnet, dass** das Umgehungsleitungsventil (32') vollständig geöffnet ist und das Abgaskanalventil (32") vollständig geschlossen ist, so dass alle Abgase durch die zweite Umgehungsleitung (30) geführt werden und die Katalysatoreinheit vollständig umgehen.

## Revendications

1. Moteur à combustion interne (10) comprenant une unité de turbocompresseur ayant au moins une partie de compresseur et au moins une partie de turbine (16), la au moins une partie de compresseur (14) étant raccordée au côté d'entrée du moteur (10) et la au moins une partie de turbine étant raccordée au côté de sortie du moteur et à une unité de catalyseur (28) disposée entre le côté de sortie du moteur et le côté d'entrée d'au moins une partie de turbine (16) et un système de commande (40) agencé afin de commander le fonctionnement du moteur à combustion interne, dans lequel la au moins une partie de turbine est pourvue d'une première conduite de dérivation (24) ayant un premier dispositif de commande de flux (26), s'étendant entre le côté d'entrée de la partie de turbine et le côté de sortie de la partie de turbine, et l'unité de catalyseur (28) est pourvue d'une seconde conduite de dérivation (30) ayant un second dispositif de commande de flux (32) s'étendant entre le côté d'entrée de l'unité de catalyseur et le côté de sortie de l'unité de catalyseur, et dans lequel le système de commande (40) est pourvu d'un mode de fonctionnement qui amorce une action de fermeture simultanée du premier dispositif de commande de flux (26) et une action de fermeture du second dispositif de commande de flux (32), **caractérisé en ce que** le système de commande (40) est pourvu d'un indicateur de position (42) du premier dispositif de commande de flux (26), et le système de commande est agencé afin de surveiller le statut de position du premier dispositif de commande de flux (26) et permettre l'action de fermeture du second dispositif de commande de flux (32) seulement dans le cas où la marge de fermeture du premier dispositif de commande de flux (26) est supérieure à une marge réglée prédéterminée.

2. Moteur à combustion interne selon la revendication 1, **caractérisé en ce que** le second dispositif de commande de flux (32) est agencé afin de router plus d'air dans l'unité de catalyseur par l'action de fermeture.

3. Moteur à combustion interne selon la revendication 1, **caractérisé en ce que** le système de commande (40) est agencé afin de déterminer une valeur de commande pour le premier dispositif de commande de flux, et permettre l'action de fermeture du second dispositif de commande de flux seulement dans le cas où la valeur de commande pour le premier dispositif de commande de flux a une marge de fermeture supérieure à une marge réglée prédéterminée.

4. Procédé de fonctionnement d'un moteur à combustion interne (10) selon une quelconque des revendications précédentes 1-3, dans lequel procédé le moteur fonctionne d'une manière fournissant du gaz d'échappement à une température qui est inférieure à une température de fonctionnement cible de l'unité de catalyseur, la soupape de conduite de dérivation (32') est ouverte en entraînant le passage d'une plus grande quantité de gaz d'échappement à travers la seconde conduite de dérivation et le contournement de l'unité de catalyseur, une soupape (26) dans la première conduite de dérivation est commandée afin de compenser les changements d'état du gaz d'échappement entrant dans la partie de turbine (16) causés par l'étape précédente de passage d'une plus grande quantité du gaz d'échappement à travers la seconde conduite de dérivation, en amorçant une phase de dérivation pendant laquelle la portion du gaz d'échappement guidée à travers la seconde conduite de dérivation (30) est diminuée et la portion des gaz d'échappement guidée à travers l'unité de catalyseur (28) est augmentée et en commandant simultanément la soupape (26) dans la première conduite de dérivation afin de compenser les changements d'état du gaz d'échappement entrant dans la partie de turbine (16).

5. Procédé de fonctionnement d'un moteur à combustion interne selon la revendication 4, **caractérisé en ce que** le procédé est mis en ouvre pendant un stade de démarrage du moteur alors que la température de gaz d'échappement du moteur est inférieure à une température de fonctionnement cible de l'unité de catalyseur.

6. Procédé de fonctionnement d'un moteur à combustion interne selon la revendication 5, **caractérisé en ce que** la soupape de conduite de dérivation (32') est totalement ouverte et la soupape de canal de gaz d'échappement (32" ) est totalement fermée en entraînant le passage de tous les gaz d' échappement à travers la seconde conduite de dérivation (30) et le contournement total de l'unité de catalyseur.
